Europäisches Patentamt

European Patent Office

Office européen des brevets

(19)

(11) Veröffentlichungsnummer: **0 448 054 A1**

(12) **EUROPÄISCHE PATENTANMELDUNG**

(21) Anmeldenummer: 91104255.4

(22) Anmeldetag: 19.03.91

(51) Int. Cl.⁵: **F01N 3/28**, F01N 3/02

(30) Priorität: 21.03.90 DE 9003268 U

(43) Veröffentlichungstag der Anmeldung:
25.09.91 Patentblatt 91/39

(84) Benannte Vertragsstaaten:
DE FR IT

(71) Anmelder: ZEUNA-STÄRKER GMBH & CO KG
Äussere Uferstrasse 61-69/73
W-8900 Augsburg 1(DE)

(72) Erfinder: Santiago, Enrique
Adalbert-Stifter-Str. 8
W-8901 Diedorf(DE)
Erfinder: Grescher, Bernhard
Buachenweg 8 a
W-8935 Fischach(DE)

(74) Vertreter: Grättinger, Günter
Wittelsbacherstrasse 5 Postfach 16 49
W-8130 Starnberg(DE)

(54) **Gehäuseanordnung für Monolithen zur Abgasreinigung in Kraftfahrzeugen.**

㊼ Das Gehäuse (1) eines zwei parallele Stränge (2,3) aufweisenden Abgaskatalysators ist aus zwei Halbschalen (9,10) aufgebaut. Die Teilungsebene (7) liegt dabei in der Ebene der beiden Stränge (2,3). Die beiden Gehäusehälften, die jeweils zwei Halbschalen (9,10) für die Lagerung der Monolithen und einen dazwischenliegenden Verbindungssteg (4) aufweisen, sind an den Verbindungsstegen (4) miteinander verbunden.

Fig. 1

Fig. 2

EP 0 448 054 A1

Die Erfindung betrifft eine Gehäuseanordnung für in parallelen Abgassträngen vorgesehene Monolithen zur Abgasreinigung in Kraftfahrzeugen, wobei die Monolithen jeweils in einem aus zwei Halbschalen bestehenden Gehäuse gelagert sind.

Bei einer derartigen bekannten Gehäuseanordnung für eine zweiflutige Abgasanlage werden die beiden Gehäusestränge, in denen jeweils ein oder mehrere Monolithen aufgenommen sind, getrennt geführt. Es sind daher im Gehäusebereich oder dicht vor und hinter den Gehäusesträngen Distanzhalter zu deren sicherer Verbindung erforderlich. Falls beide Gehäusestränge an eine gemeinsame Abgasleitung angeschlossen sind, werden Verzweigungsrohrstücke an beiden Gehäusestrangenden benötigt. Dadurch ergibt sich ein beträchlicher Herstellungsaufwand zusätzlich zu den ohnehin schon umfangreichen Schweißarbeiten. Auch der Zusammenbau der beiden Gehäusestränge mittels der genannten Verzweigungsrohrstücke ist umständlich; die Einhaltung von Fertigungstoleranzen ist schwierig.

Demgegenüber liegt der vorliegenden Erfindung die Aufgabe zugrunde, die gattungsgemäße Gehäuseanordnung einfach auszubilden und deren Montage zu erleichtern.

Erfindungsgemäß wird diese Aufgabe dadurch gelöst, daß die Monolithen beider Stränge in einem gemeinsamen, in der Ebene der beiden Stränge geteilten Gehäuse gelagert sind, wobei jede Halbschale jeweils zwei den beiden Strängen entsprechende Gehäusehälften umfaßt, die über einen schmalen, an die Trennebene angrenzenden Verbindungssteg einstückig miteinander verbunden sind, wobei eine zweckmäßige Ausgestaltung darin besteht, daß die Verbindungsstege der beiden Halbschalen durch eine in Durchströmungsrichtung des Gehäuses verlaufende gasdichte Schweißnaht miteinander verbunden sind.

Gegenüber der bekannten vierteiligen Ausführungsform besteht die erfindungsgemäße Gehäuseanordnung nur noch aus zwei Halbschalen, in denen jeweils die beiden Gehäusestranghälften zusammengefaßt sind. Gleichzeitig entfällt eine Schweißnaht in Gehäuselängsrichtung, da es zur Verbindung der beiden Halbschalen ausreicht, wenn im Bereich des Verbindungsstegs eine einzige Schweißnaht vorhanden ist.

Die beiden bei der bekannten Gehäuseanordnung vorhandenen Verzweigungsrohrstücke entfallen vollständig. Die beiden Endkammerwände bilden jeweils eine Steckmuffe, in welche das jeweilige Abgasrohr eingesteckt und im Bereich der Steckverbindung dicht mit dem Gehäuse verschweißt wird.

Im Falle einer Doppelrohr-Abgasleitung dient der Verbindungssteg bei der erfindungsgemäßen Gehäuseanordnung gleichzeitig als stabilisierende Querverbindung, so daß auf zusätzliche Distanzhalter im Gehäusebereich verzichtet werden kann.

Infolge der besonders einfachen Ausführung der erfindungsgemäßen Gehäuseanordnung ergibt sich nicht nur eine einfachere Montage, sondern auch eine größere Prozeßsicherheit bei der Fertigung, d.h. Fertigungstoleranzen können leichter eingehalten werden.

Insgesamt ist bei der erfindungsgemäßen Gehäuseanordnung der Platzbedarf etwas geringer, verglichen mit der bekannten Ausführung mit zwei getrennten Gehäusesträngen.

Im folgenden wird ein Ausführungsbeispiel der Erfindung anhand der Zeichnung erläutert. Es zeigt

Fig. 1 eine Draufsicht auf die geschlossene Gehäuseanordnung und

Fig. 2 einen Schnitt gemäß II-II in Fig. 1.

Die Gehäuseanordnung besteht aus einem Gehäuse 1 mit zwei Strängen 2, 3, welche über einen Verbindungssteg 4 miteinander verbunden sind. In jedem der beiden Stränge 2, 3 sind drei Monolithen in Serie gelagert, welche in einem Strang 2 strichliert eingezeichnet sind. An beiden Endkammerwänden 11 ist jeweils eine Steckmuffe 5 zum Einstecken und Verschweißen des zugeordneten Endes 12 einer (nicht gezeichneten) Abgasleitung ausgebildet.

Im Bereich des Verbindungsstegs 4 erstreckt sich in Längsrichtung des Gehäuses 1 eine Schweißnaht 6, welche eine gasdichte Trennung zwischen den beiden Gehäusesträngen 2, 3 gewährleistet.

In der Trennebene 7 des Gehäuses 1 befinden sich - neben dem Verbindungssteg 4 - an den Außenseiten des Gehäuses 1 die Verbindungsflansche 8, welche jeweils durchgehend zwischen den beiden Steckmuffen 5 verlaufen und längs welchen die beiden Halbschalen 9, 10 des Gehäuses 1 miteinander verschweißt sind.

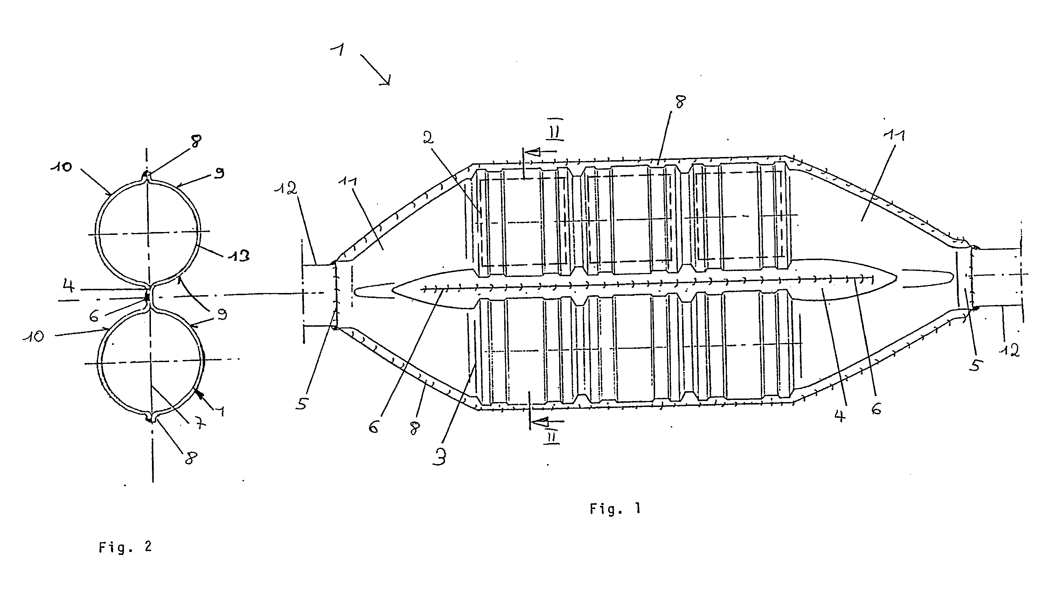

Gemäß Fig. 2 ist die Trennung des Gehäuses 1 in zwei Halbschalen 9, 10 deutlich erkennbar.

Die Querschnittsform jedes Strangs 2, 3 des Gehäuses kann auch von der Kreisform abweichen, z.B. zur Aufnahme elliptischer Katalysatormonolithen geeignet ausgebildet sein.

**Patentansprüche**

1. Gehäuseanordnung für in parallelen Abgasträngen vorgesehene Monolithen zur Abgasreinigung in Kraftfahrzeugen, wobei die Monolithen jeweils in einem aus zwei Halbschalen bestehenden Gehäuse gelagert sind,
   dadurch gekennzeichnet,
   daß die Monolithen beider Stränge (2, 3) in einem gemeinsamen, in der Ebene der beiden Stränge (2, 3) geteilten Gehäuse (1) gelagert sind, wobei jede Halbschale (9, 10) jeweils zwei den beiden Strängen (2, 3) entsprechende Gehäusehälften umfaßt, die über einen schmalen, an die Trennebene (7) angrenzenden Verbindungssteg (4) einstückig miteinander verbunden sind.

2. Gehäuseanordnung nach Anspruch 1,
dadurch gekennzeichnet,
daß die Verbindungsstege (4) der beiden Halbschalen (9, 10) durch eine in Durchströmungsrichtung des Gehäuses (1) verlaufende gasdichte Schweißnaht (6) miteinander verbunden sind.

Fig. 1

Fig. 2

4

# EUROPÄISCHER
# RECHERCHENBERICHT

Nummer der Anmeldung

**EP 91 10 4255**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | US-A-4 485 622 (TAKAGI) <br> * Spalte 3, Zeilen 16 - 60; Figuren 2, 3 * <br> — — — | 1,2 | F 01 N 3/28 <br> F 01 N 3/02 |
| Y | DE-A-1 576 753 (BOYSEN) <br> * Seite 5, letzter Absatz - Seite 6, Absatz 1; Figuren 1, 2 * <br> — — — | 1,2 | |
| A | GB-A-1 104 020 (DAIMLER-BENZ) <br> * Seite 1, Zeile 69 - Seite 2, Zeile 11; Figuren 2, 3 * <br> — — — | 1,2 | |
| A | EP-A-0 174 742 (ARVIN INDUSTRIES) <br> * Seite 9, Zeile 1 - Seite 12, Zeile 11; Figuren 1-4 * <br> — — — | 1 | |
| A | US-A-4 866 932 (MORITA) <br> — — — | | |
| A | PATENT ABSTRACTS OF JAPAN vol. 10, no. 66 (M-461)(2123) 15 März 1986, <br> & JP-A-60 212610 (HISASHI IMAI) 24 Oktober 1985, <br> * das ganze Dokument * <br> — — — | | |
| A | FR-A-2 147 565 (EBERSPÄCHER) <br> — — — — — | | |
| | | | **RECHERCHIERTE SACHGEBIETE (Int. Cl.5)** |
| | | | F 01 N |

**Der vorliegende Recherchenbericht wurde für alle Patentansprüche erstellt**

| Recherchenort | Abschlußdatum der Recherche | Prüfer |
|---|---|---|
| Den Haag | 21 Juni 91 | FRIDEN C.M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument